(19) Europäisches Patentamt
European Patent Office
Office européen des brevets

(11) **EP 2 075 127 B1**

(12) **EUROPEAN PATENT SPECIFICATION**

(45) Date of publication and mention
of the grant of the patent:
**28.03.2012 Bulletin 2012/13**

(21) Application number: **07828817.2**

(22) Date of filing: **28.09.2007**

(51) Int Cl.:
**B32B 33/00** *(2006.01)*      **B32B 27/32** *(2006.01)*
**B32B 27/08** *(2006.01)*      **B32B 3/30** *(2006.01)*
**B32B 38/06** *(2006.01)*      **C08J 7/04** *(2006.01)*
**B32B 27/16** *(2006.01)*      **B32B 7/12** *(2006.01)*

(86) International application number:
**PCT/JP2007/069076**

(87) International publication number:
**WO 2008/041649 (10.04.2008 Gazette 2008/15)**

(54) **DECORATIVE SHEET AND METHOD FOR PRODUCING THE SAME**

ZIERFOLIE UND HERSTELLUNGSVERFAHREN DAFÜR

FEUILLE DÉCORATIVE ET PROCÉDÉ POUR SA FABRICATION

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **28.09.2006 JP 2006264658**

(43) Date of publication of application:
**01.07.2009 Bulletin 2009/27**

(73) Proprietor: **Toppan Printing Co., Ltd.
Tokyo 101-8560 (JP)**

(72) Inventor: **SAGAWA, Koichi
Tokyo 110-8560 (JP)**

(74) Representative: **Andrews, Timothy Stephen
Marks & Clerk LLP
66-68 Hills Road
Cambridge
CB2 1LA (GB)**

(56) References cited:
JP-A- 2001 287 324      JP-A- 2004 066 525
JP-A- 2006 088 349      JP-A- 2006 118 163
JP-A- 2007 181 988

• DATABASE WPI Week 200627 Thomson
Scientific, London, GB; AN 2006-257554
XP002591386 -& JP 2006 088349 A (TOPPAN
PRINTING CO LTD) 6 April 2006 (2006-04-06)
• DATABASE WPI Week 200634 Thomson
Scientific, London, GB; AN 2006-325205
XP002591387 -& JP 2006 118163 A (TOPPAN
PRINTING CO LTD) 11 May 2006 (2006-05-11)

**Description**

TECHNICAL FIELD

The present invention relates to a decorative sheet used as a decorative panel by laminating with an adhesive on the surface of a wood-based board, inorganic board or metal plate and the like.

The present invention claims priority on the basis of Japanese Patent Application No. 2006-264658, filed in Japan on September 28, 2006.

BACKGROUND ART

In the past, sheets made of polyvinyl chloride resin were used most commonly as decorative sheets used in decorative panel applications. More recently, however, the use of polyvinyl chloride resin has been found to have problems, such as causing the formation of hydrogen chloride gas and dioxins causing acid rain during combustion, and bleeding out of the plasticizer added to polyvinyl chloride resin sheets resulting in poor appearance.

On the basis of this background, there has been a need for a decorative sheet using a non-vinyl chloride resin, such as polypropylene, polyethylene or acrylic, as an alternative to polyvinyl chloride resin.

In view of these circumstances, decorative sheets have been proposed and are used commercially that use resins such as polyethylene, polypropylene, polyethylene terephthalate, ethylene vinyl alcohol or acrylic for use as resins to take the place of vinyl chloride resins.

In particular, the most frequently proposed types of decorative sheets use polypropylene, which is provided with properties required of decorative sheets, including suitable flexibility, abrasion resistance, scratch resistance, heat resistance, chemical resistance and post-processability, while also being able to be provided inexpensively.

However, polypropylene also has several aspects requiring improvement. One is that resistance to ultraviolet rays and the like is not high, while another is that since polypropylene is a crystalline resin, the degree of crystallization thereof tends to be high, thereby resulting in inferior flexibility during post-processing such as bending. In addition, it also tends to be susceptible to the effects of heat history of molding conditions and the surrounding atmosphere after molding.

The providing of a surface protective layer using gravure coating, for example, is typically used as a method for improving the aforementioned ultraviolet resistance. Furthermore, in the case a polypropylene resin layer has undergone embossing treatment and the like in advance, since a surface protective layer is unable to be laminated by conventional gravure coating on locations where there are depressions or the like in the surface, there was the problem of inferior weather resistance. In order to avoid this, a method is known for filling surface protective layer even in depressions of a polypropylene resin layer by applying a technique such as wiping (see Patent Document 1). In this method, however, in addition to requiring caution to ensure that filling is carried out adequately, there was also the problem of having to go through an additional step for wiping.

In addition, with respect to the latter problem attributable to the fact that polypropylene is a crystalline resin, there were cases in which bent portions of decorative sheets became whitened and/or cracked, for example, in processes such that a decorative panel on which the decorative sheet was laminated is bent. With respect to crystallinity, for example, in the case of increasing the resin cooling ability during molding operation, namely rapidly cooling polypropylene resin following melt extrusion, the crystals present in polypropylene resin are small and of uniform size. Conversely, in the case of lowering the resin cooling ability, namely gradually cooling the polypropylene resin after melt extrusion, crystal size of polypropylene ranges from large crystals to small crystals. In many cases, the latter case tends to exhibit inferior flexibility during post-processing such as bending as compared with the former case.

In addition, in the case of carrying out embossing treatment on a decorative sheet, a hot metal roller on which embossed patterns are formed is typically pressed against the polypropylene resin to leave a pattern and then allowed to cool naturally. However, in this treatment, variations of crystal size from large to small are caused, and flexibility tends to be poor due to non-uniform crystals.

Patent Document 1: Japanese Patent Publication No. 3271022

JP2006-257554 discloses a decorative sheet comprising in order a pattern layer, a transparent polypropylene layer of a propylene homopolymer having a pentad fraction of 80% or less, and a surface protective layer comprising an isocyanate-curable resin. Before the protective layer is applied, the polypropylene layer may be embossed. In the example, the sheet has a thickness of approximately 160μm.

JP2006-325205 discloses a decorative sheet having the same basic order of layers, with the propylene homopolymer having a pentad fraction of 80% or less.

Neither JP2006-257554 nor JP2006-325205 disclose nor suggest the novel and inventive process and product of the present invention.

DISCLOSURE OF THE INVENTION

Problems to be Solved by the Invention

With the foregoing in view, an object of the present invention is to provide a decorative sheet which uses polypropylene resin and has superior weather resistance, while also able to maximally inhibit changes in appearance such as whitening or cracking of bent portions during post-processing.

[Means for Solving the Problems]

A first aspect of the present invention is a production process of a decorative sheet comprising:

providing a pattern layer on the back surface of a surface protective layer or on at least one of the front surface or the back surface of a transparent polypropylene resin layer, which is a polypropylene having a pentad fraction of 60 to 98%, wherein said pentad fraction = (number of propylene monomers in which five consecutive methyl groups are facing in the same direction/total number of propylene monomers) x 100 (%), while adjusting the layers so that the total thickness of the final decorative sheet to 40 to 300 $\mu$m;

laminating the transparent polypropylene resin layer and the surface protective layer, at least either of which is provided with the pattern layer, so that the back surface of the surface protective layer and the front surface of the transparent polypropylene resin layer are mutually facing to form a laminate containing a transparent polypropylene resin layer, a surface protective layer and a pattern layer; and

carrying out embossing treatment on the laminate.

The pentad fraction of the transparent polypropylene resin layer is suitably 60 to 98%. The lower limit of the pentad fraction is preferably 60% or more, more preferably 68% or more, and most preferably 72% or more. The upper limit of the pentad fraction is suitably 98% or less, preferably 97% or less, and more preferably 90% or less. The upper limit is 85% or less as necessary and preferably 80% or less. In addition, the polypropylene is preferably a homopolypropylene.

As a result of using the polypropylene as described above, crystal growth attributable to heat history during embossing treatment can be more preferably inhibited. As a result, changes in rigidity of the polypropylene resin layer following embossing treatment can be preferably prevented. In addition, the heat resistance performance of the decorative sheet can also be improved by selecting conditions for homopolypropylene.

In addition, elongation of the decorative sheet, which occurs during bending in particular, can be maintained at a certain level or lower by making the layer thickness of the decorative sheet 40 to 300 $\mu$m. As a result, cracking and whitening of the polypropylene resin layer or surface protective layer can be preferably prevented.

Resistance to ultraviolet rays is obtained due to the presence of the surface protective layer. In addition, the surface protective layer preferably contains at least an isocyanate-curable resin. As a result of containing an isocyanate-curable resin in the surface protective layer, a preferable uniform thickness can be ensured to a certain degree when carrying out embossing treatment following lamination of the surface protective layer. In addition, when said isocyanate-curable resin is contained and embossing treatment is carried out, since conformance to the shape formed during embossing, such as the shape of a conduit, of the surface protective layer improves, there is no occurrence of cracking or whitening of the surface protective layer when in the formed shape. In addition, whitening and cracking of the surface protective layer can also be prevented to a minimum during processing such as bending.

In addition, since a step for embossing the laminate is contained as described above, a decorative sheet can be obtained that has high resistance to ultraviolet rays and has superior flexibility.

A step is preferably also contained for providing a pattern layer on a colored sheet before providing the pattern layer on the surface protective layer or transparent polypropylene resin layer.

[Effects of the Invention]

In the production process of the first aspect of the present invention, a decorative sheet using a polypropylene resin as a material thereof can be provided that has superior weather resistance and is able to minimize changes in appearance such as whitening and cracking of bent portions during post-processing.

## EP 2 075 127 B1

BRIEF DESCRIPTION OF THE DRAWINGS

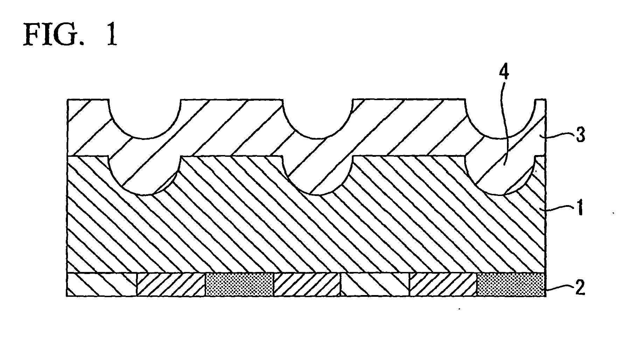

FIG. 1 is a cross-sectional view showing one example of a decorative sheet in the present invention.

BRIEF DESCRIPTION OF THE REFERENCE SYMBOLS

1 Transparent polypropylene resin layer
2 Pattern layer
3 Surface protective layer
4 Embossing treatment

BEST MODE FOR CARRYING OUT THE INVENTION

The following provides a detailed explanation of the present invention using examples thereof.

The decorative sheet of the present invention is not limited to only the examples described below, insofar as there is no deviation from the scope of the invention of the present application. The configuration, quantities, order and so forth thereof may be modified as necessary, and other layers and the like may be contained, within the scope of the claims of the present application.

A first aspect of the present invention provides a preferable production process of a decorative sheet, while a second aspect thereof provides a decorative sheet having particularly superior properties.

FIG. 1 shows the cross-sectional structure of one embodiment of the decorative sheet of the present invention. A pattern layer 2 is laminated on at least one surface of a transparent polypropylene resin layer 1 using a method such as gravure printing. Moreover, the decorative sheet of the present invention can then be obtained by further laminating a surface protective layer 3 on the front surface of the uppermost layer of the laminated layers. An ultraviolet absorber and a radical scavenger are preferably added to the surface protective layer and the transparent polypropylene resin layer. Embossing treatment can be carried out in the present invention. The embossing treatment 4 is carried out after the surface protective layer 3 is laminated onto the polypropylene resin layer 1 from the viewpoints of reducing the number of production steps and being able to control thickness.

Preferable characteristics proposed in the present invention includes: (i) the use of homopolypropylene resin in which the pentad fraction in the transparent polypropylene resin layer 1 is 60 to 98% in the first aspect , and (ii) the use of an isocyanate-curable resin in the surface protective layer 3.

With respect to the characteristic of (i), conventional methods frequently used a random polypropylene resin having an ethylene content of about 1 to 6% or a highly crystalline homopolypropylene resin having a pentad fraction in excess of 90%. The use of a random polypropylene resin as described above allows the obtaining of suitable flexibility and transparency, while the use of a highly crystalline homopolypropylene makes it possible to increase the heat resistance of the sheet while simultaneously improving scratch resistance and the like. However, in the case of using a random polypropylene resin as described above, there are limitations on the effect of enhancing flexibility of the polypropylene resin, and in harsh environments such that a decorative sheet is laminated onto a steel substrate and then subjected to bending in a low-temperature environment, cracking and whitening of the sheet become conspicuous, and sufficient effects are unable to be obtained. In addition, if a highly crystalline homopolypropylene having a high pentad fraction is used as is without providing any countermeasures, there are cases in which cracking occurs easily and crystallization of the resin becomes a factor that impairs transparency.

On the other hand, in the present invention, a homopolypropylene resin having a pentad fraction of 90% or less is preferable. The lower limit of the pentad fraction is 60% or more, preferably 68% or more. The pentad fraction of 70% or more or 72% or more is more preferable as necessary. A pentad fraction of 90% or less or less than 90% is suitable for the upper limit. The upper limit is preferably 85% or less and more preferably 80% or less as necessary. If the pentad fraction is within the aforementioned ranges, crystallization of the resin is inhibited, thereby flexibility which is unable to be obtained with the aforementioned random polypropylene can be obtained, while transparency is also improved. On the other hand, heat resistance performance is also improved as a result of using a homopolypropylene resin. Although the ratio of homopolypropylene among the propylene is preferably 100%, this ratio may be changed as necessary, and may be selected from that within a range of 30 to 90% or 40 to 80%.

Furthermore, since the first aspect includes the limitations of sheet thickness and embossing treatment, flexibility and transparency can be adjusted to a certain extend with these limitations, and therefore the pentad fraction is set over a wide range.

The thickness of the transparent polypropylene resin layer is selected as necessary. The thickness is preferably 30 to 125 $\mu$m and more preferably 60 to 90 $\mu$m. The melt mass-flow rate (MFR) of the polypropylene resin of the present invention is preferably 1 to 50 g/10 min, more preferably 2 to 40 g/10 min and even more preferably 2 to 30 g/10 min. Although the melting point of the polypropylene resin of the present invention can be selected as necessary, it is preferably 140 to 170°C and more preferably 160 to 170°C. If the melting point is within the aforementioned ranges, preferable properties can be obtained.

Although the ratio of homopolypropylene in the transparent polypropylene resin layer 1 is preferably 100%, it is also preferably 60 to 100% and more preferably 70 to 100% depending on the required properties. Examples of other resins that may be contained in the transparent polypropylene resin layer include styrene-butadiene copolymers (including hydrogenation products thereof), propylene-styrene copolymers, propylene-butene copolymers and other resins which have high compatibility with polypropylene.

The tensile elastic modulus of the transparent polypropylene resin layer is preferably 300 to 1000 MPa, more preferably 300 to 800 MPa and even more preferably 300 to 600 MPa. In addition, the latent heat of crystal fusion is preferably 50 to 100 J/g, more preferably 50 to 90 J/g, and even more preferably 50 to 80 J/g. If the tensile elastic modulus is within the above ranges, the effect is obtained of being able to impart flexibility to the decorative sheet, and if the latent heat of crystal fusion is within the above ranges, the effect is obtained of being able to maintain the degree of crystallization of the polypropylene to a low level. Furthermore, the value of latent heat of crystal fusion of the present invention can be obtained in accordance with ISO 11357-3:98. The value for tensile elastic modulus can be measured in accordance with JIS K7113.

Furthermore, the pentad fraction of a polymer of the present invention is defined in the manner described below.

$$\texttt{Polymer pentad fraction = (Number of propylene monomers}$$
$$\texttt{in which five consecutive methyl groups are facing in the same}$$
$$\texttt{direction / total number of propylene monomers) x 100(\%)}$$

Pentad fraction is reported by A. Zambelli et al. in Macromolecules, 6, 925 (1973), and the value can be obtained by measuring according to a method using $^{13}$C-NMR described in the document. Assignment of NMR absorption peaks can be carried out with reference to, for example, the subsequently published Macromolecules, 8, 687 (1975). More specifically, isotactic pentad fraction can be measured as the surface area percentage of mmmm peaks among all absorption peaks in the methyl carbon region of the $^{13}$C-NMR spectrum.

Examples of other typical methods for imparting flexibility to polypropylene resin include methods for forming a so-called biphasic structure comprised of a hard segment and a soft segment, such as a method using block polypropylene, or a method in which an elastomer component incompatible with polypropylene is added to polypropylene. However, in the case of these methods, dissociation may occur at the interface between the soft segment and the hard segment when subjected to a load such as bending. Furthermore, as a result thereof, visible light undergoes diffused reflection on the dissociated surfaces, and whitening of the polypropylene layer may be caused.

On the other hand, since the polypropylene of the present invention in which the pentad fraction is controlled does not require a combination of a hard segment and a soft segment, there is no dissociation at the interface between the soft segment and the hard segment during bending or the like, thereby preventing the occurrence of whitening of the polypropylene layer attributable to dissociation.

A heat stabilizer, flame retardant, ultraviolet absorber, photostabilizer, anti-blocking agent or catalyst scavenger and the like may also be suitably added to the transparent polypropylene resin layer 5 in the present invention as necessary to improve functionality of the decorative sheet. In particular, an ultraviolet absorber and photostabilizer are used preferably to improve weather resistance of the decorative sheet.

With respect to the isocyanate-curable resin of (ii), when the surface protective layer is composed of a commonly used ultraviolet-curable or electron beam-curable material, the hardness of the surface protective layer ends up being excessively high. Accordingly, cracking and whitening tend to occur during bending following lamination to a steel plate substrate material. In contrast, the use of an isocyanate-curable material in the surface protective layer of the present invention enables urethane bonds formed by a reaction between isocyanate and a hydroxyl group to impart flexibility to the surface protective layer, thereby resulting in greater resistance to the occurrence of cracking and whitening. In addition, conformation (following ability) to various shapes such as conduit-like shapes and the like can be adequately maintained during embossing treatment on the surface protective layer.

There are no particular limitations on the surface protective layer 3 of the present invention insofar as it preferably at least contains an isocyanate-curable resin. Examples of isocyanate-curable resins include mixed resins which includes isocyanate and a prepolymer containing hydroxyl groups such as polyether polyols, polyester polyols, polyester polyurethane polyols, and polyacryl polyols as main components. A preferable property of these resins is a glass transition temperature of preferably 0 to 100˚C, more preferably 15 to 85˚C and even more preferably 30 to 70˚C. Although the ratio of the isocyanate-curable resin in the surface protective layer 3 may be selected as necessary, it is preferably 100%. The isocyanate-curable resin has a 100% modulus as defined in JIS K6301 of preferably 1 to 15 MPa, more preferably 2 to 10 MPa and even more preferably 2 to 5 MPa.

There are no particular limitations on the material usable for the surface protective layer 3, insofar as it satisfies the aforementioned conditions. Materials which can form a film are used preferably, and such a film can be obtained by, for example, reacting a prepolymer in which at least hydroxyl groups have been introduced into an acrylic resin, ester resin or the like with a separately prepared curing agent having isocyanate groups to form a urethane reaction product in the resin. The isocyanate component for the layer can be selected as necessary, and an aromatic isocyanate may be used if the emphasis is on rapid curing, while an aliphatic isocyanate may be used if the emphasis is on ultraviolet resistance. Specific examples of the isocyanate component which is a curing agent include, tolylene diisocyanate, 4,4'-diphenylmethane diisocyanate and xylene diisocyanate which are aromatic isocyanate component, and hexamethylene diisocyanate and isophorone diisocyanate which are aliphatic isocyanate component.

In addition, various types of weather resistance stabilizers can be added to the surface protective layer 3 as necessary. Examples of ultraviolet absorbers usable for the layer include benzotriazole-based, benzoate-based, benzophenone-based and hydroxyphenyltriazine-based ultraviolet absorbers, while examples of photostabilizers include hindered amine-based photostabilizers. These may be used alone or a plurality of types thereof may be used in combination. Although the thickness of the surface protective layer 3 is selected as necessary, it is preferably 3 to 20 $\mu$m and more preferably 6 to 12 $\mu$m.

The following provides a description of each of the other layers.

The decorative sheet of the present invention has also a pattern layer. The method used to form the pattern layer may be selected as necessary. A typical example of a method for forming the pattern layer 2 as in the drawings comprises; printing the pattern layer onto the front or back surface, or both sides, of the transparent polypropylene resin layer 1 by a known printing method such as gravure printing, intaglio printing, flexographic printing, silk screen printing, electrostatic printing or inkjet printing. However, the printing method used is not necessarily limited to these methods. In addition, a known ink can be used for the ink used. For example, an ink can be used that comprises the addition of a colorant such a dye and pigment and/or extender pigment to a vehicle followed by the arbitrary addition of a plasticizer, stabilizer, wax, grease, drying agent, curing agent, thickener, dispersant or filler and the like and then adequately mixing with a solvent or diluent and the like.

In addition, the pattern layer may be formed by transfer. For example, a method can be used comprising; forming the pattern layer 2 on a transfer base sheet, which can be arbitrary selected, according to a forming method described above or the like; laminating that sheet with another layer such as a colored sheet layer or the transparent polypropylene resin layer 1 using a method such as heat lamination, dry lamination, wet lamination or extrusion lamination; and separating a transfer base sheet to transfer the pattern layer 2 to the colored sheet layer or the transparent polypropylene resin layer 1.

There are no particular limitations on the material of a colored sheet in the present invention insofar as it is a material other than a polyvinyl chloride resin. A polypropylene-based material is used preferably in consideration of printability, economy and the like. However, the material is not necessarily limited to a polypropylene-based material, but other materials can also be used. Examples of the materials include polyethylene, ethylene-vinyl acetate copolymer, ethylene-vinyl alcohol copolymer, polystyrene, ABS, poly(methyl methacrylate), poly(methyl acrylate), poly(butyl acrylate), polyvinyl acetate, polyvinyl alcohol, polyvinyl butyral, polyvinyl acetal, polyethylene terephthalate, polybutylene terephthalate, polyethylene naphthalate, polycarbonate, polyurethane, polyamide, Nylon 6 and Nylon 66.

In addition, an additive may be added to the aforementioned resin used in the colored sheet layer as necessary. One type or two or more types of additives may be suitably added, examples of which include colorants, inorganic pigments, antioxidants, photostabilizers and anti-blocking agents.

There are no particular limitations on the board that is laminated with the decorative sheet of the present invention. Concealability is preferably imparted to the colored sheet layer by a method such as addition of pigment and/or formation of a pigment coating layer (concealing layer) as necessary so that an underlying substrate such as a wood-based board, inorganic board or metal plate is not visible from the front surface of the decorative sheet. However, this does not apply in cases of desiring to emphasize the quality of the material of the underlying substrate.

In addition, the method used to manufacture the colored sheet layer can be selected as necessary. In the case of using a T-die extrusion method, after adding a concealing coloring agent such as a dye or pigment to the synthetic resin material which is for forming the colored sheet layer, the material is extruded from the T-die in a heated molten state, thereby enabling formation of the colored sheet layer to impart concealing effects.

Although there are no particular limitations on the coloring method of the colored sheet layer in the case of using a T-die extrusion method, a known method such as a dry coloring method or master batch method can be used.

Dry coloring method refers to a method able to be used to form the colored sheet layer by directly mixing a colorant in the form of a fine powder, in which a pigment has been treated with a dispersion assistant or surfactant, into an ordinary non-colored synthetic resin material to color the synthetic resin material followed by extrusion. On the other hand, the master batch method refers to melting and kneading an ordinary non-colored synthetic resin material with a highly concentrated pigment to preliminarily prepare pre-dispersed master batch pellets, followed by further dry-blending the pre-dispersed master batch pellets and ordinary non-colored synthetic resin material in an extrusion hopper followed by extruding to form the colored sheet layer .

An ordinarily used pigment can be used as a pigment used in the colored sheet. An inorganic pigment such as titanium oxide, ultramarine, cadmium pigment or iron oxide is particularly preferable in consideration of heat resistance and weather resistance. In addition, an organic pigment such as phthalocyanine pigment or quinacridone pigment can also be used preferably. There are no particular limitations on the pigment ratio to resin or color of the pigment, and are suitably determined on consideration of the degree of concealability and appearance.

In addition, calendaring method can also be used to manufacture the concealing colored sheet layer . An example of a method in the case of using calendaring comprises; manufacturing the colored sheet layer by calendaring while simultaneously forming color concealability and a pattern in the colored sheet layer itself. Alternatively, concealability and a pattern can be formed for the colored sheet layer using a technique combining these methods with a printing method, transfer method or the like as previously described.

In the case of laminating a polypropylene resin on the front surface of the colored sheet layer, on which the pattern layer 2 has been provided , namely the polypropylene resin is laminated on the pattern layer, it is preferable to provide an adhesive layer between the polypropylene resin and the pattern layer. There are no particularly limitations on the adhesive layer insofar as it does not cause the occurrence of problems. It is preferable to not use a non-chlorine-based material for the adhesive layer . The adhesive layer is preferably formed from a two-liquid type curable urethane resin that forms urethane bonds in a reaction between a polyol and isocyanate. At least one of hexamethylene diisocyanate and isophorone diisocyanate is preferably contained among the aforementioned isocyanate. In addition, although there are no particular limitations on the method used to form the adhesive layer , a gravure method (such as gravure printing or gravure coating) is used preferably. In addition, in the case of selecting extrusion lamination for the method used to laminate a polypropylene resin layer on the colored sheet layer, an anchor coat layer (not shown) may be provided instead of the adhesive layer.

Although the thickness of the decorative sheet of the present invention laminated in this manner is selected as necessary, the total thickness thereof is within the range of 40 to 300 $\mu$m and preferably within the range of 100 to 200 $\mu$m. In a decorative sheet having a thickness within the range of 40 to 300 $\mu$m, the local elongation percentage of the sheet at bent portions formed during bending is not large, thereby preventing the occurrence of cracking and whitening of the surface protective layer and the transparent polypropylene resin layer, and thus making this preferable. Furthermore, in the case the thickness is less than the aforementioned ranges, it is not possible to adequately ensure thickness of a layer subjected to weather resistance treatment, resulting in the possibility of being unable to obtain adequate weather resistance performance. There are also cases in which the concealing performance of the substrate of the decorative sheet may not be adequate obtained.

In addition, effects to more closely approximate actual texture can also be brought out by imparting a pattern consisting of surface irregularities to the transparent polypropylene resin layer or surface protective layer to improve the appearance of the decorative sheet of the present invention.

Examples

The following provides an explanation of the effects of the present invention based on examples thereof.

(Examples of First Aspect)

Resin consisting of the addition of 6% by weight of an inorganic pigment, 0.2% by weight of a phenol-based antioxidant, 0.3% by weight of a hindered amine-based photostabilizer and 0.2% by weight of an anti-blocking agent to a random polypropylene resin was melt extruded at a thickness of 70 $\mu$m to form a sheet. After carrying out corona treatment on the surface of the sheet, a wood grain pattern was formed by gravure printing using a patterning ink (LAMISTER, Toyo Ink Mfg. Co., Ltd.) to form a pattern layer. Moreover, a two-liquid type curable adhesive for dry lamination (TAKELAC (main agent), TAKENATE (curing agent), Mitsui Chemicals Polyurethanes, Inc.) was coated onto the wood grain pattern layer by gravure printing at a solid content thickness of about 5 $\mu$m, followed by drying for 2 minutes in an oven at 60°C to evaporate the solvent component and prepare a colored sheet.

A transparent polypropylene resin layer and a surface protective layer were then laminated onto the colored sheet as described in Table 1 followed by further carrying out embossing treatment to obtain decorative sheets of Examples 1 to 6.

Table 1

| | | Example 1 | Example 2 | Example 3 |
|---|---|---|---|---|
| Transparent polypropylene resin layer(*1) | Resin brand name | Prime Polypro (homo type) | Prime Polypro (homo type) | Prime Polypro (homo type) |
| | Thickness | 250 μm | 100 μm | 100 μm |
| Surface protective layer | Resin brand name | UVT Clear | UVT Clear | UVT Clear |
| | Thickness | 10 μm | 10 μm | 10 μm |
| Embossing treatment | | After coating surface protective layer | After coating surface protective layer | After coating surface protective layer |
| Decorative sheet total thickness | | 335 μm | 185 μm | 185 μm |
| Polypropylene pentad fraction | | 97% | 97% | 97% |
| | | Example 4 | Example 5 | Example 6 |
| Transparent polypropylene resin layer (*1) | Resin brand name | Prime TPO (homo type) | Prime TPO (homo type) /Prime Polypro (homo type) = 50/50 | Prime Polypro (block type) |
| | Thickness | 100 μm | 90 μm | 90 μm |
| Surface protective layer | Resin brand name | UC Clear | UC Clear | UC Clear |
| | Thickness | 10 μm | 10 μm | 10 μm |
| Embossing treatment (*2) | | After coating surface protective layer | After coating surface protective layer | After coating surface protective layer |
| Decorative sheet total thickness | | 185 μm | 185 μm | 185 μm |
| Polypropylene pentad fraction | | 72% | 85% | 85% |

(*1) An ultraviolet absorber (TINUVIN 326, Ciba Specialty Chemicals Inc.) at 0.5% and a photostabilizer (TINUVIN 783, Ciba Specialty Chemicals Inc.) at 0.5% were respectively added to all of the transparent polypropylene resin layers followed by forming a sheet with a single screw extruder and carrying out corona treatment on both sides of the sheet.

(*2) Embossing treatment consisted of nipping the decorative sheet between a nip roller and a metal roller having an embossing pattern heated to 90°C followed by air-cooling.

<Description of Materials>

PRIME POLYPRO: Manufactured by Prime Polymer Co., Ltd. (homo type polypropylene resin, tensile elastic modulus: 1500 MPa) (pentad fraction: 97%, MFR: 18 g/min)
PRIME TPO: Manufactured by Prime Polymer Co., Ltd. (pentad fraction: 72%, MFR: 8 g/min)
UVT Clear: Manufactured by Dainippon Ink and Chemicals, Inc., ultraviolet-curable surface protective coating agent
UC Clear: Manufactured by Dainippon Ink and Chemicals, Inc. , isocyanate-curable surface protective coating agent

On the other hand, a decorative sheet of Comparative Example 1 was obtained by laminating a transparent polypropylene resin layer and an embossed surface protective layer on a colored sheet based on Table 2.

Table 2

| | | Comparative Example 1 |
|---|---|---|
| Transparent polypropylene resin layer (*1) | Resin brand name | Prime TPO (homo type) |
| | Thickness | 90 μm |

(continued)

|  |  | Comparative Example 1 |
|---|---|---|
| Surface protective layer | Resin brand name | UC Clear |
|  | Thickness | 10 μm |
| Embossing treatment | | Before coating surface protective layer |
| Decorative sheet total thickness | | 185 μm |
| Polypropylene pentad fraction | | 72% |

A weather resistance test (using a black panel at 63° and exposing to a shower for 12 minutes of every 60 minutes) was carried out using a sunshine weather meter (Suga Test Instruments Co., Ltd.) on each of the decorative sheets obtained in this manner. The surface status of the decorative sheets was visually confirmed every 500 hours and the time when deterioration was first confirmed was recorded. The evaluation results are shown in Table 3.

In addition, the decorative sheets obtained in the examples and comparative example were laminated onto a wood substrate having a thickness of 2.5 mm, and a V-shaped groove was cut at an angle of 90° and depth of 2. 5 mm in the wood substrate towards the decorative sheet from the side on which the decorative sheet was not laminated while being careful not to damage the decorative sheet, followed by carrying out a bending test in an environment at 5°C by bending until both walls of the V-shaped groove were pressed together. In addition, a pencil scratch test was carried out on the surface of the decorative sheet laminated to the wood substrate in accordance with the method defined in JIS K5400. The evaluation results are shown in Table 3.

Table 3

|  | Example 1 | Example 2 | Example 3 | Example 4 | Example 5 | Example 6 | Comparative Example 1 |
|---|---|---|---|---|---|---|---|
| Weather resistance test | 4000 h | 3500 h | 3500 h | 3500 h | 3500 h | 3500 h | 1500 h |
| Bending test | ×× | Δ | ○ | ○ | ○ | × | ○ |
| Pencil scratch test | H | F | B | 2B | B | 2B | 2B |

Note: Evaluation of bending test results was carried out by experts, and the evaluation criteria are the same as those shown in Table 8 to be described later.

As can be understood from Table 3, the most superior weather resistance performance was obtained for the decorative sheet of Example 1 of the present invention among the decorative sheets evaluated. This is thought to be because, in addition to the characteristics of the present application, the transparent polypropylene resin layer is protected as a result of the surface protective layer penetrating to conduit-shaped portion of the embossing, and since the transparent polypropylene resin layer was given greater thickness, the absolute amount of ultraviolet absorber within the transparent polypropylene layer was greater in comparison with that of the other decorative sheets. Although results of the decorative sheet of Example 1 was somewhat inferior in terms of bending compatibility, this is thought to be due to the harsh test conditions as well as the greatest thickness of the decorative sheet of Example 1, and is of an adequately practical level in the case of carrying out embossing in a more moderate shape.

In Example 2 of the present invention, the thickness of the transparent polypropylene resin layer was less than that of Example 1, and as a result thereof, although weather resistance performance was somewhat lower than that of Example 1, bending property improved. Moreover, since an isocyanate-curable coating was used for the top coat in Example 3 and the pentad fraction of the transparent polypropylene resin layer was lowered in Example 4, although the results of the pencil scratch test were somewhat poorer than those of Example 1, processing property regarding bending variation improved. As a result of controlling the pentad fraction to a high value within the numerical range of the present invention as in Example 5, the results for the pencil scratch test improved as compared with Example 4.

In the case of using a block polypropylene for the transparent polypropylene resin layer as in Example 6, both pencil scratch hardness and processing property regarding bending were inferior to the cases of using homopolypropylene. Whitening of the polypropylene was also confirmed in Example 6.

In Comparative Example 1, the start of surface deterioration in the ultraviolet irradiation test was earlier than the results for the Examples. In addition, visually confirmable deterioration occurred starting at the conduit-shaped portion. Since embossing treatment was carried out prior to coating the surface protective layer, these results are believed to have occurred due to the surface protective layer not extending to the conduit-shaped portion.

As is clear from these results, a decorative sheet produced according to the process of a first aspect of the present invention demonstrates effects that considerably improve weather resistance performance. Moreover, as a result of defining the surface protective layer, transparent polypropylene resin layer, decorative sheet total thickness and the like by combining the preferable conditions indicated in the present invention, more superior effects, namely effects that improve bending property and scratch resistance, can be obtained. In addition, since a decorative sheet according to the process of the present invention does not use any vinyl chloride, there are no concerns over environmental problems, and deterioration caused by irradiation by ultraviolet rays and the like proceeds more slowly in comparison with decorative sheets of the prior art. Moreover, it is possible to provide a decorative which shows small appearance deterioration such as cracking or whitening, when bending is conducted after laminating the decorative sheet onto various substrates.

INDUSTRIAL APPLICABILITY

According to the present invention, a decorative sheet that uses a polypropylene resin as a material thereof, has superior weather resistance performance, and inhibits changes in appearance, such as whitening or cracking of bent portions during post-processing, as much as possible can be efficiently produced and provided.

**Claims**

1. A production process of a decorative sheet comprising:

   providing a pattern layer on the back surface of a surface protective layer or on at least one of the front surface and the back surface of a transparent polypropylene resin layer, which is a polypropylene having a pentad fraction of 60 to 98%, wherein said pentad fraction = (number of propylene monomers in which five consecutive methyl groups are facing in the same direction/total number of propylene monomers) x 100 (%), while adjusting the layers so that the total thickness of the final decorative sheet is 40 to 300 $\mu$m;
   laminating the transparent polypropylene resin layer and the surface protective layer, at least either of which is provided with the pattern layer, so that the back surface of the surface protective layer and the front surface of the transparent polypropylene resin layer are mutually facing to form a laminate containing a transparent polypropylene resin layer, a surface protective layer and a pattern layer; and
   carrying out embossing treatment on the laminate.

2. The production process of a decorative sheet according to claim 1, wherein the surface protective layer at least contains an isocyanate-curable resin.

3. The production process of a decorative sheet according to claim 1, wherein the transparent polypropylene resin layer is a polypropylene having a pentad fraction of 72 to 97%.

4. The production process of a decorative sheet according to claim 1, wherein the transparent polypropylene resin layer is a polypropylene having a pentad fraction of 72 to 90%.

5. The production process of a decorative sheet according to claim 1, wherein the polypropylene is a homopolypropylene.

6. The production process of a decorative sheet according to claim 1, further comprising: providing a pattern layer on a coloured sheet before providing the pattern layer on the surface protective layer or the transparent polypropylene resin layer.

7. The production process of a decorative sheet according to claim 1, wherein the tensile elastic modulus measured in accordance with JISK 7113 of the transparent polypropylene resin layer is 300 to 1000 MPa, and the latent heat of crystal fusion measured in accordance with ISO 11357-3:98 is 50 to 100 J/g.

8. A decorative sheet produced according to the production process according to claim 1.

## EP 2 075 127 B1

**Patentansprüche**

1.  Herstellungsverfahren für eine Zierfolie, umfassend:

    das Bereitstellen einer Musterschicht auf der Rückenfläche einer Oberflächenschutzschicht oder auf mindestens einer der Vorderfläche und der Rückenfläche einer durchsichtigen Polypropylenharzschicht, die aus einem Polypropylen besteht, das eine Pentadfraktion von 60 bis 98 % aufweist, wobei die Pentadfraktion = (Anzahl von Propylenmonomeren, in denen fünf aufeinanderfolgende Methylgruppen in dieselbe Richtung zeigen/gesamte Anzahl von Propylenmonomeren) x 100 (%) ist, während die Schichten so eingestellt werden, dass die Gesamtdicke der endgültigen Zierfolie 40 bis 300 $\mu$m beträgt;
    das Laminieren der durchsichtigen Polypropylenharzschicht und der Oberflächenschutzschicht, von denen mindestens eine mit der Musterschicht versehen ist, so dass die Rückenfläche der Oberflächenschutzschicht und die Vorderfläche der durchsichtigen Polypropylenharzschicht einander zugewandt sind, um ein Laminat zu bilden, das eine durchsichtige Polypropylenharzschicht, eine Oberflächenschutzschicht und eine Musterschicht enthält; und
    das Durchführen einer Prägebehandlung auf dem Laminat.

2.  Herstellungsverfahren für eine Zierfolie nach Anspruch 1, wobei die Oberflächenschutzschicht mindestens ein isocyanataushärtbares Harz umfasst.

3.  Herstellungsverfahren für eine Zierfolie nach Anspruch 1, wobei die durchsichtige Polypropylenharzschicht aus einem Polypropylen besteht, das eine Pentadfraktion von 72 bis 97 % aufweist.

4.  Herstellungsverfahren für eine Zierfolie nach Anspruch 1, wobei die durchsichtige Polypropylenharzschicht aus einem Polypropylen besteht, das eine Pentadfraktion von 72 bis 90 % aufweist.

5.  Herstellungsverfahren für eine Zierfolie nach Anspruch 1, wobei das Polypropylen ein Homopolypropylen ist.

6.  Herstellungsverfahren für eine Zierfolie nach Anspruch 1, des Weiteren das Bereitstellen einer Musterschicht auf einer farbigen Platte vor dem Bereitstellen der Musterschicht auf der Oberflächenschutzschicht oder der durchsichtigen Polypropylenharzschicht umfassend.

7.  Herstellungsverfahren für eine Zierfolie nach Anspruch 1, wobei der Zug-Elastizitätsmodul, JISK 7113 gemäß gemessen, der durchsichtigen Polypropylenharzschicht 300 bis 1000 MPa beträgt und die latente Kristallschmelzwärme, ISO 11357-3:98 gemäß gemessen, 50 bis 100 J/g beträgt.

8.  Zierfolie, die dem Herstellungsverfahren nach Anspruch 1 gemäß hergestellt wird.


**Revendications**

1.  Procédé de production d'une feuille décorative comprenant:

    la fourniture d'une couche formant motif sur la surface dorsale d'une couche protectrice de surface ou sur au moins l'une parmi la surface frontale et la surface dorsale d'une couche transparente de résine de polypropylène, qui est un polypropylène ayant une fraction pentade de 60 à 98 %, dans lequel ladite fraction pentade = (le nombre de monomères de propylène dans lequel cinq groupes méthyliques consécutifs font face au même sens/nombre total de monomères de propylène) x 100 (%), tout en ajustant les couches afin que l'épaisseur totale de la feuille décorative finale soit de 40 à 300 $\mu$m;
    stratification de la couche transparente de résine de polypropylène et de la couche protectrice de surface, dont au moins l'une est proposée avec la couche formant motif, afin que la surface dorsale de la couche protectrice de surface et la surface frontale de la couche transparente de résine de polypropylène soient mutuellement face à face afin de former un stratifié contenant une couche transparente de résine de polypropylène, une couche protectrice de surface et une couche formant motif; et
    la conduite d'un traitement d'embossage sur le stratifié.

2.  Procédé de production d'une feuille décorative selon la revendication 1, dans lequel la couche protectrice de surface contient au moins une résine durcissable par isocyanate.

3. Procédé de production d'une feuille décorative selon la revendication 1, dans lequel la couche transparente de résine de polypropylène est un polypropylène ayant une fraction pentade de 72 à 97 %.

4. Procédé de production d'une feuille décorative selon la revendication 1, dans lequel la couche transparente de résine de polypropylène est un polypropylène ayant une fraction pentade de 72 à 90 %.

5. Procédé de production d'une feuille décorative selon la revendication 1, dans lequel le polypropylène est un homopolypropylène.

6. Procédé de production d'une feuille décorative selon la revendication 1, comprenant en outre: la fourniture d'une couche formant motif sur une feuille colorée avant de proposer la couche formant motif sur la couche protectrice de surface ou la couche transparente de résine de polypropylène.

7. Procédé de production d'une feuille décorative selon la revendication 1, dans lequel le module d'élasticité en traction mesuré selon la norme JISK 7113 de la couche transparente de résine de polypropylène est de 300 à 1 000 MPa, et la chaleur latente de fusion cristalline mesurée selon la norme ISO 11357-3:98 est de 50 à 100 J/g.

8. Feuille décorative produite selon le procédé de production selon la revendication 1.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006264658 A
- JP 3271022 B

- JP 2006257554 A
- JP 2006325205 A